# EUROPÄISCHE PATENTANMELDUNG

(11) **EP 3 492 739 A1**
(43) Veröffentlichungstag der Anmeldung: **05.06.2019**
(21) Anmeldenummer: 18205543.4
(22) Anmeldetag: 09.11.2018
(51) Int. Cl.: F04B 35/00, B60T 17/02, F04B 35/04

(54) **VERSORGUNGSVORRICHTUNG ZUM VERSORGEN EINES FÜLLKÖRPERS MIT FLUID SOWIE KRAFTFAHRZEUG**

(30) Priorität: 04.12.2017 DE 102017128766
(71) Anmelder: Martin Kfz - Technik GmbH, 86720 Nördlingen (DE)
(72) Erfinder: Martin, Jörg, 86720 Nördlingen (DE)
(74) Vertreter: Schorr, Peter Karl

(57) **Zusammenfassung**

Die Erfindung betrifft eine Versorgungsvorrichtung (2) zum Versorgen eines Füllkörpers (4) mit Fluid, insbesondere mit Luft, die in oder an einem Kraftfahrzeug anordenbar oder angeordnet ist, mit mindestens einem elektrischen Generator (6), mit mindestens einem Antriebsmittel (12), das durch den Generator (6) mit elektrischer Energie versorgbar ist, mit mindestens einem zwischen Generator (6) und Antriebsmittel (12) angeordneten Frequenzumformer (22), durch den zumindest eine Drehzahl des Antriebsmittels (12) einstellbar und/oder regelbar ist, und mit mindestens einer mindestens einen Einlass (18) und mindestens einen Auslass (20) umfassenden und durch das Antriebsmittel (12) betreibbaren oder betriebenen Verdichtereinrichtung (16), durch die ein Fluid, insbesondere Luft, von einem Umgebungsdruck vor oder am mindestens einen Einlass (18) auf einen Arbeitsdruck am mindestens einen Auslass (20) komprimierbar ist und einem Füllkörper (4) zuführbar ist, wobei ein Arbeitsdruck des Fluids und/oder ein Volumenstrom des Fluids zumindest durch das Antriebsmittel (12) und/oder den Frequenzumformer (22) einstellbar ist/sind. Sie zeichnet sich dadurch aus, dass der Generator (6) mit mindestens einem Fahrzeugmotor des Kraftfahrzeugs, durch den das Kraftfahrzeug zum Bewegen antreibbar ist, gekoppelt ist und durch den Fahrzeugmotor betreibbar ist oder betrieben ist.

## Beschreibung

Die Erfindung betrifft eine Versorgungsvorrichtung zum Versorgen eines Füllkörpers mit Fluid, insbesondere mit Luft, die in oder an einem Kraftfahrzeug anordenbar oder angeordnet ist, mit mindestens einem elektrischen Generator, mit mindestens einem Antriebsmittel, das durch den Generator mit elektrischer Energie versorgbar ist, mit mindestens einem zwischen Generator und Antriebsmittel angeordneten Frequenzumformer, durch den zumindest eine Drehzahl des Antriebsmittels einstellbar und/oder regelbar ist, und mit mindestens einer mindestens einen Einlass und mindestens einen Auslass umfassenden und durch das Antriebsmittel betreibbaren oder betriebenen Verdichtereinrichtung, durch die ein Fluid, insbesondere Luft, von einem Umgebungsdruck vor oder am mindestens einen Einlass auf einen Arbeitsdruck am mindestens einen Auslass komprimierbar ist und einem Füllkörper zuführbar ist, wobei ein Arbeitsdruck des Fluids und/oder ein Volumenstrom des Fluids zumindest durch das Antriebsmittel und/oder den Frequenzumformer einstellbar ist/sind sowie ein Kraftfahrzeug mit einer derartigen Versorgungsvorrichtung.

Derartige Versorgungsvorrichtungen sind aus dem Stand der Technik bekannt. Sie deinen beispielsweise dazu, Druckluft mit einem bestimmten Arbeitsdruck zur Verfügung zu stellen. Aus dem Bereich der Sanierung von Kanalsystemen ist es bekannt als so genannter "Liner" ausgebildete Füllkörper an schwer zugänglichen Stellen der Kanalisation anzuordnen und mit Luft zu füllen. Derart mit Druckluft befüllt, dient der Füllkörper dann als Stützkörper und ermöglicht die Sanierung des jeweiligen Kanalabschnitts. Die Luft entweicht permanent aus dem Stützkörper der am Ende mit einer definierten Öffnung ausgestattet ist. Diese dient dazu, dass Wärme aus dem Füllkörper durch die ausströmende Luft abtransportiert werden kann. Der Füllkörper kann im Kanal als "zweite Haut" verbleiben.

Die bekannten Versorgungsvorrichtungen sind transportabel in einem Fahrzeuginnenraum eines Kraftfahrzeugs angeordnet. Zum Betreiben des elektrischen Generators findet ein transportierbarer Dieselmotor Verwundung.

Aufgabe eines Ausführungsbeispiels der Erfindung ist, eine Versorgungsvorrichtung sowie ein Kraftfahrzeug mit einer derartigen Versorgungsvorrichtung vorzuschlagen, die kompakter und effizient baut.

Diese Aufgabe wird bei einer eingangs genannten Versorgungsvorrichtung dadurch gelöst, dass der Generator mit mindestens einem Fahrzeugmotor des Kraftfahrzeugs, durch den das Kraftfahrzeug zum Bewegen antreibbar ist, gekoppelt ist und durch den Fahrzeugmotor betreibbar ist oder betrieben ist.

Dadurch, dass der elektrische Generator durch den Fahrzeugmotor des Kraftfahrzeugs betreibbar ist, muss kein zusätzliches Antriebsaggregat, wie Dieselmotor, zum Betreiben des elektrischen Generators im Kraftfahrzeug mitgeführt werden. Hierdurch ist zum einen der im Fahrzeuginnenraum zur Verfügung stehende Platz erweitert und zum anderen ohnehin vorhandene Komponenten des Kraftfahrzeugs effizient genutzt. Hierdurch lässt sich die Versorgungsvorrichtung kompakt und effizient ausgestalten.

Darüber hinaus erweist es sich als vorteilhaft, wenn die Versorgungsvorrichtung mindestens ein Getriebe umfasst, das zwischen dem Fahrzeugmotor und dem elektrischen Generator angeordnet ist und das dem Fahrzeugmotor zum Bewegen des Kraftfahrzeugs funktional zugeordnet ist. Hierdurch können auf weitere, ohnehin im Kraftfahrzeug vorhandene, Komponenten zurückgegriffen werden, die zum Betreiben der Versorgungsvorrichtung verwendet werden können.

Durch die zuvor beschriebene Ausgestaltung der Versorgungsvorrichtung sind Fahrzeugmotor und Getriebe in ihrem Einsatzspektrum erweitert einsetzbar.

Durch das Vorsehen des dem Fahrzeugmotor zugeordneten Getriebes, kann der elektrische Generator auf einfache Weise mit unterschiedlichen Umdrehungsgeschwindigkeiten und Frequenzen betrieben werden.

Darüber hinaus erweist es sich als vorteilhaft, wenn die Verdichtereinrichtung mindestens ein zwischen dem mindestens einen Einlass und dem mindestens einen Auslass angeordnetes Verdichtermittel, wie Drehkolbengebläse, und/oder mindestens ein Schalldämpfmittel umfasst, das insbesondere in Strömungsrichtung vor und/oder nach dem Verdichtermittel angeordnet ist.

Das Verdichtermittel kann beispielsweise ein Drehkolbengebläse umfassen. Darüber hinaus ist es auch denkbar, dass das Verdichtermittel einen Schraubenverdichter, Hubkolbenverdichter, Labyrinth-Kolben-Verdichter, Turboverdichter, Ionische- und Lamellenverdichter, Seitenkanalverdichter und/oder einen Rotations- und Schraubenverdichter umfasst.

Grundsätzlich ist es denkbar, dass ausschließlich ein einziges Schalldämpfmittel vorgesehen ist. Um einen geräuschreduzierten Betrieb der Versorgungsvorrichtung gewährleisten zu können, erweist es sich als vorteilhaft, wenn unmittelbar an den Einlass angrenzend, ein Ansaugschalldämpfer vorgesehen ist und wenn zwischen dem Verdichtermittel und dem mindestens einen Auslass mindestens ein weiteres Schalldämpfmittel vorgesehen ist.

Ferner erweist es sich als vorteilhaft, wenn die Verdichtereinrichtung mindestens eine Bypasseinheit umfasst, die zwischen dem Verdichtermittel und dem mindestens einen Auslass angeordnet ist und die mindestens ein Regelmittel umfasst, durch das zumindest ein Volumenstrom des Fluids durch das Regelmittel der Bypasseinheit hindurch einstellbar ist.

Durch die Bypasseinheit kann die dem mindestens einen Auslass zugeführte Luft nach Passieren des Verdichtermittels bezüglich Luftmenge und Arbeitsdruck eingestellt werden. Solchenfalls kann das durch die Bypasseinheit abgezweigte Fluid bezüglich seines Volumenstroms erhöht werden, beispielsweise, wenn der Arbeitsdruck am Auslass einen vorgegebenen Wertebereich überschreitet oder reduziert werden, wenn der Arbeitsdruck am Auslass den vorgegebenen Wertebereich unterschreitet.

Der Wertebereich des Arbeitsdrucks am Auslass umfasst vorzugsweise -1 bis 15 bar. Hierdurch kann ein Unter- oder Überdruck im Füllkörper erzeugt werden.

Es erweist sich insbesondere als vorteilhaft, wenn der Volumenstrom durch das Regelmittel mindestens 0qm/min, insbesondere mindestens 1qm/min, insbesondere mindestens 3qm/min, insbesondere mindestens 5 qm/min umfasst.

Bei einer Ausführungsform der Versorgungseinrichtung ist es vorgesehen, dass die Verdichtereinrichtung mindestens ein flexibel biegbares schlauchartiges Zuführmittel umfasst, das mit ersten einem Ende mittelbar oder unmittelbar mit dem Verdichtermittel verbunden ist und an einem zweiten Ende den Auslass umfasst und/oder dass der mindestens eine Auslass der Verdichtereinrichtung mindestens einen Arbeitsauslass, durch den das Fluid mit dem Arbeitsdruck dem Füllkörper zuführbar ist, und mindestens einen Bypassauslass umfasst, durch den das Fluid der Umgebung zuführbar ist.

Grundsätzlich ist es denkbar, dass auch die Luft aus dem Bypassauslass dem Füllkörper zuführbar ist. Allerdings lässt sich die Bypasseinheit einfach ausbilden, wenn der Bypassauslass mit der Umgebung verbunden ist.

Zur vereinfachten Regelung der Versorgungseinrichtung erweist es sich als vorteilhaft, wenn die Verdichtereinrichtung mindestens ein Sensormittel, insbesondere Druck, Temperatur und/oder Dichtesensor, umfasst, das insbesondere zwischen dem Verdichter und dem Arbeitsauslass und/oder Bypassauslass angeordnet ist.

Solchenfalls ist ein Ansteuern des Antriebsmittels und/oder des Frequenzumformers in Abhängigkeit der durch das mindestens eine Sensormittel erfassten Daten derart möglich, dass die Verdichtereinrichtung einen vorgebbaren Arbeitsdruck und/oder einen vorgebbaren Volumenstrom des Fluids zur Verfügung stellen kann.

Um die im Fahrzeuginnenraum zur Verfügung stehenden Platzkapazitäten weiter zu erhöhen, erweist es sich als vorteilhaft, wenn das Verdichtermittel, das Antriebsmittel, das Schalldämpfmittel, das Sensormittel und/oder die Bypasseinheit der Verdichtereinrichtung an einem Fahrzeugboden das Kraftfahrzeugs auf der dem Fahrzeuginnenraum abgewandten Seite angeordnet ist/sind.

Hierdurch kann der überwiegende Teil der Komponenten der Versorgungseinrichtung außerhalb des Fahrzeuginnenraums angeordnet werden. Es ist denkbar, dass mindestens ein Schalldämpfmittel und der Auslass der Verdichtereinrichtung im Kraftfahrzeug angeordnet sind. Dies erweist sich insbesondere dann als vorteilhaft, wenn der Auslass, insbesondere der Arbeitsauslass das zweite Ende des Zuführmittels umfasst. Solchenfalls kann das flexibel biegbare schlauchartige Zuführmittel im Fahrzeuginnenraum angeordnet werden und schnell und einfach mit dem Füllkörper verbunden werden.

Die Versorgungseinrichtung kann eine Leistung von 1kW bis 100 kW betragen, .je nach erforderlicher Leistung des Verdichtermittels.

Darüber hinaus wird die Aufgabe gelöst durch ein Kraftfahrzeug mit mindestens einem Fahrzeugmotor und mit mindestens einer im oder am Kraftfahrzeug angeordneten Versorgungsvorrichtung zum Versorgen eines Füllkörpers mit Fluid mit Luft, insbesondere mit mindestens einem der zuvor genannten Merkmale, die mindestens einen elektrischen Generator, die mindestens ein Antriebsmittel, das durch den Generator mit elektrischer Energie versorgbar ist, die mindestens einen zwischen Generator und Antriebsmittel angeordneten Frequenzumformer, durch den zumindest eine Drehzahl des Antriebsmittels einstellbar und/oder regelbar ist, und die mindestens eine mindestens einen Einlass und mindestens einen Auslass umfassenden und durch das Antriebsmittel betreibbaren oder betriebenen Verdichtereinrichtung, durch die ein Fluid, insbesondere Luft, von einem Umgebungsdruck vor oder am mindestens einen Einlass auf einen Arbeitsdruck am mindestens einen Auslass komprimierbar ist und einem Füllkörper zuführbar ist, wobei ein Arbeitsdruck des Fluids und/oder ein Volumenstrom des Fluids zumindest durch das Antriebsmittel und/oder den Frequenzumformer einstellbar ist/sind, bei dem der Generator mit dem mindestens einen Fahrzeugmotor des Kraftfahrzeug, durch den das Kraftfahrzeug zum Bewegen antreibbar ist, gekoppelt ist und durch den Fahrzeugmotor betreibbar ist oder betrieben ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Versorgungsvorrichtung.

In der Zeichnung zeigt:

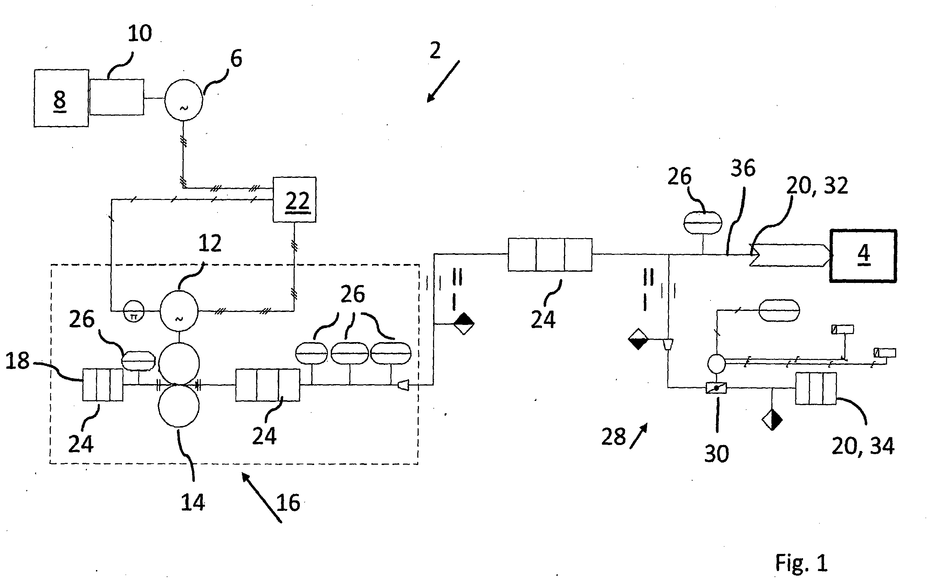

- Figur 1: Eine schematische Darstellung eines Ausführungsbeispiels der Versorgungsvorrichtung.

Die Figur zeigt eine insgesamt mit dem Bezugszeichen 2 versehene Versorgungsvorrichtung zum Versorgen eines Füllkörpers 4 mit Fluid, insbesondere mit Luft. Die Versorgungsvorrichtung 2 ist in oder an einem Kraftfahrzeug (in den Figuren nicht dargestellt) angeordnet. Die Versorgungsvorrichtung 2 umfasst einen elektrischen Generator 6, der durch einen Fahrzeugmotor 8 des Kraftfahrzeugs antreibbar ist. Bei dem in Figur 1 gezeigten Ausführungsbeispiel ist zwischen dem Fahrzeugmotor 8 und dem Generator 6 ein Getriebe 10 des Kraftfahrzeugs angeordnet, durch das die von dem Fahrzeugmotor 8 erzeugte Antriebskraft auf den Generator 6 übertragbar ist.

Darüber hinaus umfasst die Versorgungsvorrichtung 2 ein Antriebsmittel 12, durch das ein Verdichtermittel 14 einer Verdichtereinrichtung 16 antreibbar ist. Die Verdichtereinrichtung 16 umfasst einen Einlass 18, durch den Luft aus der Umgebung mit einem Umgebungsdruck einsaugbar ist sowie einen Auslass 20, durch den die durch das Verdichtermittel 14 auf einen Arbeitsdruck komprimierte Luft an den Füllkörper 4 abgebbar ist. Um einen Arbeitsdruck des Fluids und/oder einen Volumenstrom des Fluids einstellen zu können, ist zwischen dem Antriebsmittel 12 und dem elektrischen Generator 6 ein Frequenzumformer 22 angeordnet, durch den zumindest eine Drehzahl des Antriebsmittels 12 einstellbar und regelbar ist.

Darüber hinaus ist bei dem in Figur 1 ersichtlichen Ausführungsbeispiel 3 Schalldämpfmittel 24 vorgesehen, durch die eine Geräuschentwicklung der Versorgungsvorrichtung reduzierbar ist. Hierbei ist ein Schalldämpfmittel 14 unmittelbar am Einlass 18 angeordnet und ein weiteres Schalldämpfmittel 24 zwischen dem Verdichtermittel 14 und Sensormittel 26 angeordnet. Ein weiteres Schalldämpfmittel 24 ist zwischen den Sensormittel 26 und dem Auslass 20 angeordnet. Die Sensormittel 26 umfassen bei dem in Figur 1 gezeigten Ausführungsbeispiel insbesondere Druck- und Temperatursensoren.

Ferner umfasst die Versorgungsvorrichtung 2 eine Bypasseinheit 28, die ein Regelmittel 30 umfasst, durch das ein Volumenstrom des Fluids durch das Regelmittel 30 einstellbar ist. Durch die Bypasseinheit 28 wird das Volumen des Fluids aufgeteilt. Der Auslass 20 umfasst hierdurch einen Arbeitsauslass 32, durch den das Fluid dem Füllkörper 4 zuführbar ist, und einen Bypassauslass 34, durch den das Fluid nach Hindurchtreten durch das Regelmittel 30 an die Umgebung abführbar ist. Um das auf Arbeitsdruck verdichtete Fluid von dem Verdichtermittel 14 der Verdichtereinrichtung 26 über den Arbeitsauslass 32 an den Füllkörper 4 abzugeben, umfasst die Verdichtereinrichtung 16 ein flexibel biegbares schlauchartiges Zuführmittel 36, das einerseits mit dem Verdichtermittel 14 verbunden ist und andererseits den Arbeitsauslass 32 umfasst.

In Figur 1 ist schematisch die Anordnung der einzelnen Komponenten der Versorgungsvorrichtung 2 dargestellt. Hierbei sind die Komponenten, die im Bereich I angeordnet sind, an einem Fahrzeugboden des Kraftfahrzeugs auf der dem Fahrzeuginnenraum abgewandten Seite angeordnet. Die im Bereich II angeordneten Komponenten sind oberhalb des im Fahrzeuginnenraum abgewandten Bereichs des Fahrzeugbodens angeordnet.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Versorgungsvorrichtung
- 4: Füllkörper
- 6: Generator
- 8: Fahrzeugmotor
- 10: Getriebe
- 12: Antriebsmittel
- 14: Verdichtermittel
- 16: Verdichtereinrichtung
- 18: Einlass
- 20: Auslass
- 22: Frequenzumformer
- 24: Schalldämpfmittel
- 26: Sensormittel
- 28: Bypasseinheit
- 30: Regelmittel
- 32: Arbeitsauslass
- 34: Bypassauslass
- 36: Zuführmittel

## Patentansprüche

1. Versorgungsvorrichtung (2) zum Versorgen eines Füllkörpers (4) mit Fluid, insbesondere mit Luft, die in oder an einem Kraftfahrzeug anordenbar oder angeordnet ist, mit mindestens einem elektrischen Generator (6), mit mindestens einem Antriebsmittel (12), das durch den Generator (6) mit elektrischer Energie versorgbar ist, mit mindestens einem zwischen Generator (6) und Antriebsmittel (12) angeordneten Frequenzumformer (22), durch den zumindest eine Drehzahl des Antriebsmittels (12) einstellbar und/oder regelbar ist, und mit mindestens einer mindestens einen Einlass (18) und mindestens einen Auslass (20) umfassenden und durch das Antriebsmittel (12) betreibbaren oder betriebenen Verdichtereinrichtung (16), durch die ein Fluid, insbesondere Luft, von einem Umgebungsdruck vor oder am mindestens einen Einlass (18) auf einen Arbeitsdruck am mindestens einen Auslass (20) komprimierbar ist und einem Füllkörper (4) zuführbar ist, wobei ein Arbeitsdruck des Fluids und/oder ein Volumenstrom des Fluids zumindest durch das Antriebsmittel (12) und/oder den Frequenzumformer (22) einstellbar ist/sind, **dadurch gekennzeichnet dass** der Generator (6) mit mindestens einem Fahrzeugmotor (8) des Kraftfahrzeugs, durch den das Kraftfahrzeug zum Bewegen antreibbar ist, gekoppelt ist und durch den Fahrzeugmotor (8) betreibbar ist oder betrieben ist.

2. Versorgungsvorrichtung (2) nach Anspruch 1, **gekennzeichnet durch** mindestens ein Getriebe (10), das zwischen dem Fahrzeugmotor (8) und dem elektrischen Generator (6) angeordnet ist und das dem Fahrzeugmotor (8) zum Bewegen des Kraftfahrzeugs funktional zugeordnet ist.

3. Versorgungsvorrichtung (2) nach Anspruch 1 oder 2, **dadurch gekennzeichnet, dass** die Verdichtereinrichtung (16) mindestens ein zwischen dem mindestens einen Einlass (18) und dem mindestens einen Auslass (20) angeordnetes Verdichtermittel (14), wie Drehkolbengebläse, und/oder mindestens ein Schalldämpfmittel (24) umfasst, das insbesondere in Strömungsrichtung vor und/oder nach dem Verdichtermittel (14) angeordnet ist.

4. Versorgungseinrichtung (2) nach mindestens einem der vorhergehenden Ansprüche, **dadurch gekennzeichnet, dass** die Verdichtereinrichtung (16) mindestens eine Bypasseinheit (28) umfasst, die zwischen dem Verdichtermittel (14) und dem mindestens einen Auslass (20) angeordnet ist und die mindestens ein Regelmittel (30) umfasst, durch das zumindest ein Volumenstrom des Fluids durch das Regelmittel (30) der Bypasseinheit (28) hindurch einstellbar ist.

5. Versorgungseinrichtung (2) nach Anspruch 4, **dadurch gekennzeichnet, dass** der Volumenstrom durch das Regelmittel (30) mindestens 1qm/min, insbesondere mindestens 3qm/min, insbesondere mindestens 5 qm/min umfasst.

6. Versorgungseinrichtung (2) nach mindestens einem der Ansprüche 5 oder 4, **dadurch gekennzeichnet, dass** die Verdichtereinrichtung (16) mindestens ein flexibel biegbares schlauchartiges Zuführmittel (36) umfasst, das mit ersten einem Ende mittelbar oder unmittelbar mit dem Verdichtermittel (14) verbunden ist und an einem zweiten Ende den Auslass (20) umfasst und/oder dass der mindestens eine Auslass (20) der Verdichtereinrichtung (16) mindestens einen Arbeitsauslass (32), durch den das Fluid mit dem Arbeitsdruck dem Füllkörper zuführbar ist, und mindestens einen Bypassauslass (34) umfasst, durch den das Fluid der Umgebung zuführbar ist.

7. Versorgungseinrichtung (2) nach mindestens einem der vorhergehenden Ansprüche, **dadurch gekennzeichnet, dass** die Verdichtereinrichtung (16) mindestens ein Sensormittel (26), insbesondere Druck, Temperatur und/oder Dichtesensor, umfasst, das insbesondere zwischen dem Verdichter und dem Arbeitsauslass (32) und/oder Bypassauslass (34) angeordnet ist.

8. Versorgungseinrichtung (2) nach mindestens einem der vorhergehenden Ansprüche, **dadurch gekennzeichnet, dass** das Verdichtermittel (14), das Antriebsmittel (12), das Schalldämpfmittel (24), das Sensormittel (26) und/oder die Bypasseinheit (28) der Verdichtereinrichtung (16) an einem Fahrzeugboden das Kraftfahrzeugs auf der dem Fahrzeuginnenraum abgewandten Seite angeordnet ist/sind.

9. Kraftfahrzeug mit mindestens einem Fahrzeugmotor (8) und mit mindestens einer im oder am Kraftfahrzeug angeordneten Versorgungsvorrichtung (2) zum Versorgen eines Füllkörpers (4) mit Fluid mit Luft, insbesondere nach einem der Ansprüche 1 bis 8, die mindestens einen elektrischen Generator (6), die mindestens ein Antriebsmittel (12), das durch den Generator (6) mit elektrischer Energie versorgbar ist, die mindestens einen zwischen Generator (6) und Antriebsmittel (12) angeordneten Frequenzumformer (22), durch den zumindest eine Drehzahl des Antriebsmittels (12) einstellbar und/oder regelbar ist, und die mindestens eine mindestens einen Einlass (18) und mindestens einen Auslass (20) umfassenden und durch das Antriebsmittel (12) betreibbaren oder betriebenen Verdichtereinrichtung (16), durch die ein Fluid, insbesondere Luft, von einem Umgebungsdruck vor oder am mindestens einen Einlass (18) auf einen Arbeitsdruck am mindestens einen Auslass (20) komprimierbar ist und einem Füllkörper (4) zuführbar ist, wobei ein Arbeitsdruck des Fluids und/oder ein Volumenstrom des Fluids zumindest durch das Antriebsmittel (12) und/oder den Frequenzumformer (22) einstellbar ist/sind, **dadurch gekennzeichnet dass** der Generator (6) mit dem mindestens einen Fahrzeugmotor des Kraftfahrzeug, durch den das Kraftfahrzeug zum Bewegen antreibbar ist, gekoppelt ist und durch den Fahrzeugmotor betreibbar ist oder betrieben ist.
